(19) Europäisches Patentamt / European Patent Office / Office européen des brevets

(11) **EP 4 031 927 B1**

(12) **EUROPEAN PATENT SPECIFICATION**

(45) Date of publication and mention of the grant of the patent:
**30.10.2024 Bulletin 2024/44**

(21) Application number: **20771595.4**

(22) Date of filing: **18.09.2020**

(51) International Patent Classification (IPC):
**G02B 27/00** (2006.01)  **G02B 27/01** (2006.01)
**F21V 8/00** (2006.01)

(52) Cooperative Patent Classification (CPC):
**G02B 27/0172**; G02B 6/0016; G02B 2027/0112

(86) International application number:
**PCT/EP2020/076173**

(87) International publication number:
**WO 2021/053182 (25.03.2021 Gazette 2021/12)**

(54) **OPTICAL DEVICE FOR COUPLING A HIGH FIELD OF VIEW OF INCIDENT LIGHT**

OPTISCHE VORRICHTUNG ZUM KOPPELN EINES HOHEN BLICKFELDES VON EINFALLENDEM LICHT

DISPOSITIF OPTIQUE POUR COUPLER UN CHAMP DE VISION ÉLEVÉ DE LUMIÈRE INCIDENTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2019 EP 19198478**

(43) Date of publication of application:
**27.07.2022 Bulletin 2022/30**

(73) Proprietor: **InterDigital Madison Patent Holdings, SAS**
**75017 Paris (FR)**

(72) Inventors:
• **DRAZIC, Valter**
  **35576 Cesson-Sévigné (FR)**
• **SHRAMKOVA, Oksana**
  **35576 Cesson-Sévigné (FR)**

(74) Representative: **Rittner, Karsten**
**Rittner & Partner**
**Patentanwälte mbB**
**Schiffgraben 17**
**30159 Hannover (DE)**

(56) References cited:
**WO-A1-2019/122529     US-A1- 2017 363 871**
**US-A1- 2018 275 350**

**Description**

**CROSS-REFERENCE TO RELATED APPLICATIONS**

The present application claims priority of EP 19198478.0, entitled "An optical device for coupling a ultra high FOV light incident on said optical device," filed September 19, 2020.

**BACKGROUND**

The present disclosure relates to the field of optics and photonics, and more specifically to optical device for coupling light incident on the optical device. It may find applications in the field of conformable and wearable optics (i.e. AR/VR glasses (Augmented Reality/Virtual Reality)), as well as in a variety of other electronic consumer products comprising displays and/or lightweight imaging systems.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

AR/VR glasses are considered as the next generation human-machine interface, thus raising significant interest of major industrial players in the domain of consumer electronics and mobile devices. Development of AR/VR glasses (and more generally eyewear electronic devices) is associated with a number of challenges, including reduction of size and weight of such devices as well as improvement of the image quality (in terms of contrast, field of view, color depth, etc.) that should be realistic enough to enable a truly immersive user experience.

The tradeoff between the image quality and physical size of the optical components motivates research into ultra-compact optical components that can be used as building blocks for more complex optical systems, such as AR/VR glasses. Such optical components shall also be easy to fabricate and replicate.

In such AR/VR glasses, various types of refractive and diffractive lenses and beam-forming components are used to guide the light from a micro-display or a projector towards the human eye, allowing forming a virtual image that is superimposed with an image of the physical world seen with a naked eye (in case of AR glasses) or captured by a camera (in case of VR glasses).

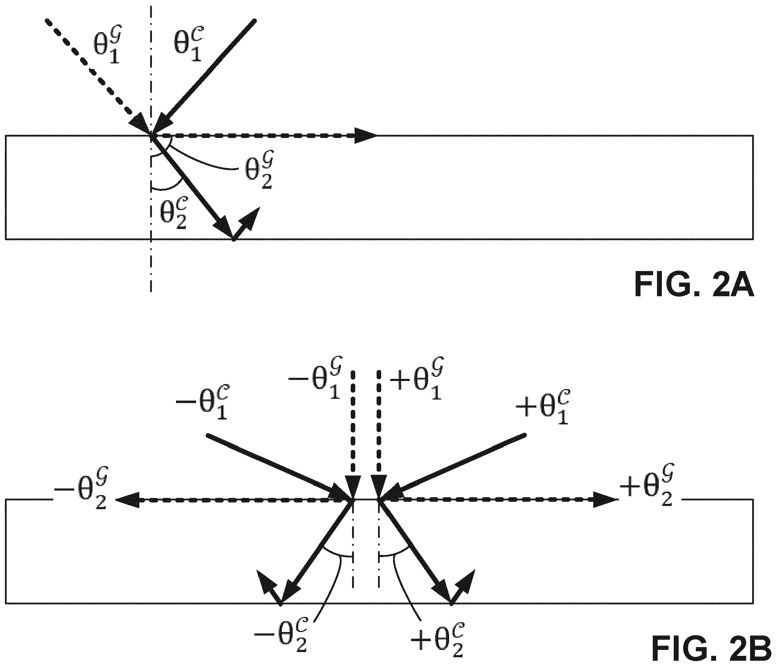

Some kinds of AR/VR glasses utilizes an optical waveguide wherein light propagates into the optical waveguide by TIR (for Total Internal Reflection) only over a limited range of internal angles. The FoV (for Field of View) of the waveguide depends on the material of the waveguide. The FoV of a waveguide may be represented by the maximum span of $\theta_1^+ - \theta_1^-$ which propagates into the waveguide by TIR. In general, and as illustrated by FIG. 2A, the biggest angular span that can be coupled into the waveguide is defined by two rays: the critical ray (

$$\theta_1^{\mathcal{C}}$$

in FIG. 2A) having incident angle

$$\theta_1^{\mathcal{C}}$$

and the grazing ray (

$$\theta_1^{\mathcal{G}}$$

in FIG. 2A) having incident angle

$$\theta_1^{\mathcal{G}}.$$

. The critical ray is the light ray that just diffracts into the waveguide at the critical angle

$$\theta_2^C,$$

, which may be determined by

$$sin\theta_2^C = 1/n_2(\lambda),$$

, where $n_2(\lambda)$ is the refractive index of the waveguide's material at the wavelength $\lambda$ of the incident light. Above the critical angle

$$\theta_2^C,$$

, total internal reflection (TIR) occurs.

The grazing ray is the ray having an input angle that diffracts into the waveguide at grazing incidence

$$\theta_2^G = 90°.$$

The theoretical FoV of a waveguide presented above is for a single mode system where one single diffraction mode is used to carry the image: either +1 or -1 diffraction mode.

The field of view in systems based on optical waveguides is limited by the angular bandwidth of the glass plate. If we diffract one mode into the glass plate, the FoV is given as a function of the index of refraction of the material of the glass plate. The FoV of a waveguide of refractive index $n_2$ is given by $\Delta\theta_1 = 2sin^{-1}(\frac{n_2-1}{2n_1})$, where $n_1$ is the refractive index of the host medium (for air, $n_1 = 1$).

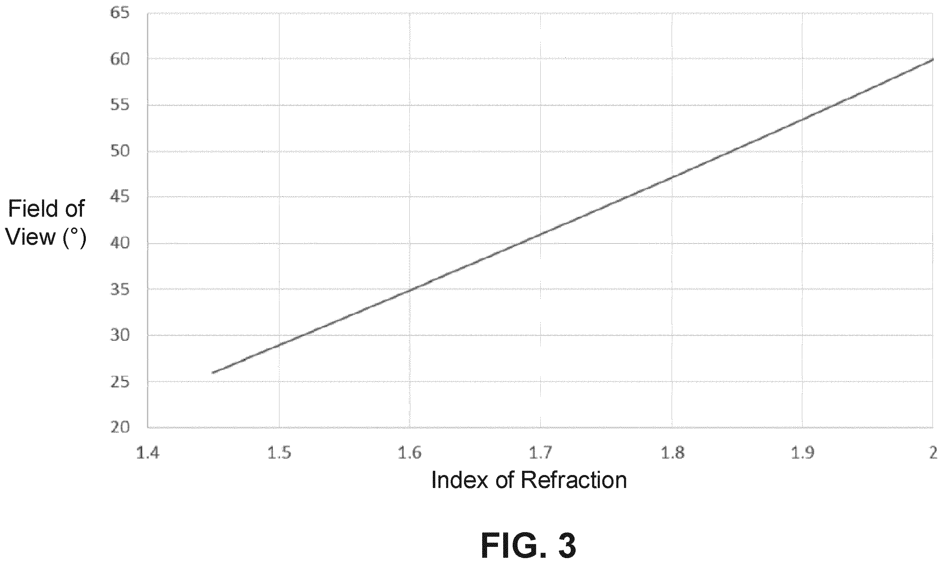

FIG. 3 shows a graph for reasonable ranges of $n_2$. For $n_2 = 1.5$ the total field of view for a single mode system is rather limited to $\Delta\theta_1 = 28.96°$. It can be seen that 60 degrees FoV is a practical limit for flat waveguides because materials with a refractive index above 2.0 are not generally available.

The field of view of an optical waveguide can be further extended by taking advantage of a second direction of propagation inside of the waveguide, doubling it. For instance, in WO2017180403, a waveguide with extended Field of View is proposed wherein a dual mode image propagation is used. In this method, they use the diffraction mode +1 to carry the right hand side image (negative angles of incidence on the in-coupler) in one direction and the -1 mode to propagate the positive angles of incidence into the opposite direction into the waveguide. Such a system is illustrated by FIG. 2B wherein critical angle and grazing angle are shown for both diffraction modes. In WO2017180403, combining both half images is done thanks to the pupil expanders and out-couplers at the exit of the waveguide so that the user sees one single image. The benefit of the system is to double the Field of View since each half image can use the whole angular bandwidth of the waveguide in each direction of propagation.

In EP3671293A1, "An optical device comprising at least one diffraction grating having a grating pitch above the wavelength," an optical waveguide comprising a diffraction grating configured to diffract a light of at least one given wavelength incident on the optical waveguide is disclosed. The diffraction grating has a grating pitch above the at least one given wavelength and is configured to diffract the incident light at a diffraction order $|M| > 1$, with M being the diffraction order.

Using diffraction orders higher than 1 has the effect of multiplying the wavelength by the order which is used in the diffraction equation. As the grating pitch is directly a function of the product $M\lambda$, this means that the grating pitch is multiplied by M. It was shown in EP3671293A1 that the structures used for the in-coupler are much bigger and opens up new possibilities in the fabrication technology, because nano-imprinting could be used. Also, fewer lines per mm for the grating density are necessary and the fabrication process can more easily be optimized since the structures will be larger than a wavelength of light, rather than sub-wavelength in size.

It was also shown in EP3671293A1 that such an optical waveguide using both $\pm2$ diffraction orders provides

a FoV of about 60° with a refractive index of 1.5. It is thus possible to get a 60° Field of View using a material with refractive index 1.5, instead of 2 in single mode.

However, a 60° FoV is still limited with respect to the total human field of view where stereopsis is effective for human vision and which is about 114°. Publication WO 2018/175488 A1 discloses an optical device, comprising: a plurality of waveguides formed over one another and having formed thereon respective diffraction gratings, wherein the respective diffraction gratings are configured to diffract visible light incident thereon into respective waveguides, such that visible light diffracted into the respective waveguides propagates therewithin, wherein the respective diffraction gratings are configured to diffract the visible light incident on the respective waveguides within respective field of views (FOVs) into the respective waveguides with respect to layer normal directions of the respective waveguides, and wherein the respective FOVs are such that the plurality of waveguides are configured to diffract the visible light within a combined FOV that is continuous and greater than each of the respective FOVs.

SUMMARY

The invention is set forth in the appended claims.

BRIEF DESCRIPTION OF THE DRAWINGS

FIG. 1A is a cross-sectional schematic view of a waveguide display.

FIG. 1B is a schematic illustration of a binocular waveguide display with a first layout of diffractive optical components.

FIG. 1C is a schematic illustration of a binocular waveguide display with a second layout of diffractive optical components.

FIG. 1D is a schematic exploded view of a double-waveguide display according to some embodiments.

FIG. 1E is a cross-sectional schematic view of a double-waveguide display according to some embodiments.

FIG. 2A illustrates critical and grazing rays that are in-coupled in a single-mode waveguide.

FIG. 2B illustrates critical and grazing rays that are in-coupled in a dual-mode waveguide.

FIG. 3 is a graph illustrating a waveguide's field of view as a function of the refraction index of its material.

FIG. 4 is a schematic cross-sectional view of a double waveguide optical device according to an embodiment of the present disclosure.

FIG. 5 is a cross-sectional view illustrating an example geometry of a base pattern of an in-coupler used in some embodiments.

FIG. 6 illustrates the diffraction performances of an example diffraction grating for a first waveguide WG1 of the system illustrated in FIG. 3.

FIG. 7 illustrates the diffraction performances of an example diffraction grating for a second waveguide WG2 of the system illustrated in FIG. 3.

FIGs. 8A-8C are cross-sectional views illustrating the generation of nanojet phenomena by the U-shaped geometry based pattern of FIG. 5 for different angles of incident light.

FIG. 9A is a graph illustrating diffraction performance of an example first waveguide WG1 according to some embodiments for a refractive index $n_H$ = 2.5.

FIG. 9B is a graph illustrating diffraction performance of an example second waveguide WG2 according to some embodiments for a refractive index $n_H$ = 2.5.

FIG. 10 illustrates schematically an exemplary optical device for an RGB imaging system according to an embodiment of the present disclosure.

FIG. 11 illustrates the diffraction performances for the blue color in the first waveguide WG1 in an example four-waveguide embodiment.

FIG. 12 illustrates the diffraction performances for the blue color in the second waveguide WG2 in an example four-waveguide embodiment.

FIG. 13 illustrates the diffraction performances for the green color in the first waveguide WG1 in an example four-waveguide embodiment.

FIG. 14 illustrates the diffraction performances for the green color in the second waveguide WG2 in an example four-waveguide embodiment.

FIG. 15 illustrates the diffraction performances for the green color in the third waveguide WG3 in an example four-waveguide embodiment.

FIG. 16 illustrates the diffraction performances for the red color in the first waveguide WG1 in an example four-waveguide embodiment.

FIG. 17 illustrates the diffraction performances for the red color in the second waveguide WG2 in an example four-waveguide embodiment.

FIG. 18 illustrates the diffraction performances for the red color in the third waveguide WG3 in an example four-waveguide embodiment.

FIG. 19 illustrates the diffraction performances for the red color in the fourth waveguide WG4 in an example four-waveguide embodiment.

FIG. 20 is a schematic perspective view of a portion of an example diffraction grating according to an embodiment of the present disclosure.

FIG. 21 is an exploded schematic perspective view of an example four-waveguide display according to some embodiments.

## DETAILED DESCRIPTION

### Overview of Example Waveguide Architecture.

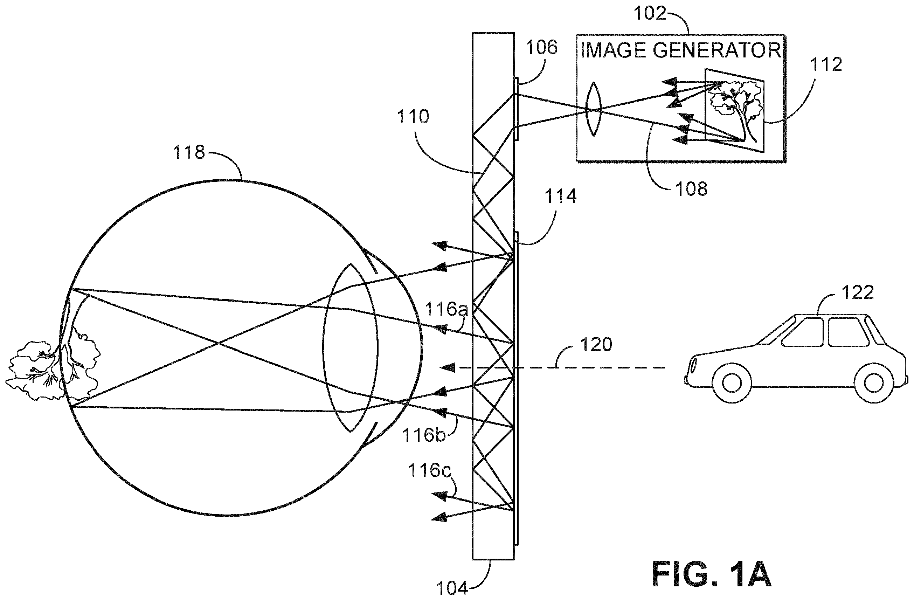

Described herein are waveguide display systems and methods. An example waveguide display device is illustrated in FIG. 1A. FIG. 1A is a schematic cross-sectional side view of a waveguide display device in operation. An image is projected by an image generator 102. The image generator 102 may use one or more of various techniques for projecting an image. For example, the image generator 102 may be a laser beam scanning (LBS) projector, a liquid crystal display (LCD), a light-emitting diode (LED) display (including an organic LED (OLED) or micro LED ($\mu$LED) display), a digital light processor (DLP), a liquid crystal on silicon (LCoS) display, or other type of image generator or light engine.

Light representing an image 112 generated by the image generator 102 is coupled into a waveguide 104 by a diffractive in-coupler 106. The in-coupler 106 diffracts the light representing the image 112 into one or more diffractive orders. For example, light ray 108, which is one of the light rays representing a portion of the bottom of the image, is diffracted by the in-coupler 106, and one of the diffracted orders 110 (e.g. the second order) is at an angle that is capable of being propagated through the waveguide 104 by total internal reflection.

At least a portion of the light 110 that has been coupled into the waveguide 104 by the diffractive in-coupler 106 is coupled out of the waveguide by a diffractive out-coupler 114. At least some of the light coupled out of the waveguide 104 replicates the incident angle of light coupled into the waveguide. For example, in the illustration, out-coupled light rays 116a, 116b, and 116c replicate the angle of the in-coupled light ray 108. Because light exiting the out-coupler replicates the directions of light that entered the in-coupler, the waveguide substantially replicates the original image 112. A user's eye 118 can focus on the replicated image.

In the example of FIG. 1A, the out-coupler 114 out-couples only a portion of the light with each reflection allowing a single input beam (such as beam 108) to generate multiple parallel output beams (such as beams 116a, 116b, and 116c). In this way, at least some of the light originating from each portion of the image is likely to reach the user's eye even if the eye is not perfectly aligned with the center of the out-coupler. For example, if the eye 118 were to move downward, beam 116c may enter the eye even if beams 116a and 116b do not, so the user can still perceive the bottom of the image 112 despite the shift in position. The out-coupler 114 thus operates in part as an exit pupil expander in the vertical direction. The waveguide may also include one or more additional exit pupil expanders (not shown in FIG. 1A) to expand the exit pupil in the horizontal direction.

In some embodiments, the waveguide 104 is at least partly transparent with respect to light originating outside the waveguide display. For example, at least some of the light 120 from real-world objects (such as object 122) traverses the waveguide 104, allowing the user to see the real-world objects while using the waveguide display. As light 120 from real-world objects also goes through the diffraction grating 114, there will be multiple diffraction orders and hence multiple images. To minimize the visibility of multiple images, it is desirable for the diffraction order zero (no deviation by 114) to have a great diffraction efficiency for light 120 and order zero, while higher diffraction orders are lower in energy. Thus, in addition to expanding and out-coupling the virtual image, the out-coupler 114 is preferably configured to let through the zero order of the real image. In such embodiments, images displayed by the waveguide display may appear to be superimposed on the real world.

In some embodiments, as described in further detail below, a waveguide display includes more than one waveguide layer. Each waveguide layer may be configured to preferentially convey light with a particular range of wavelengths and/or incident angles from the image generator to the viewer.

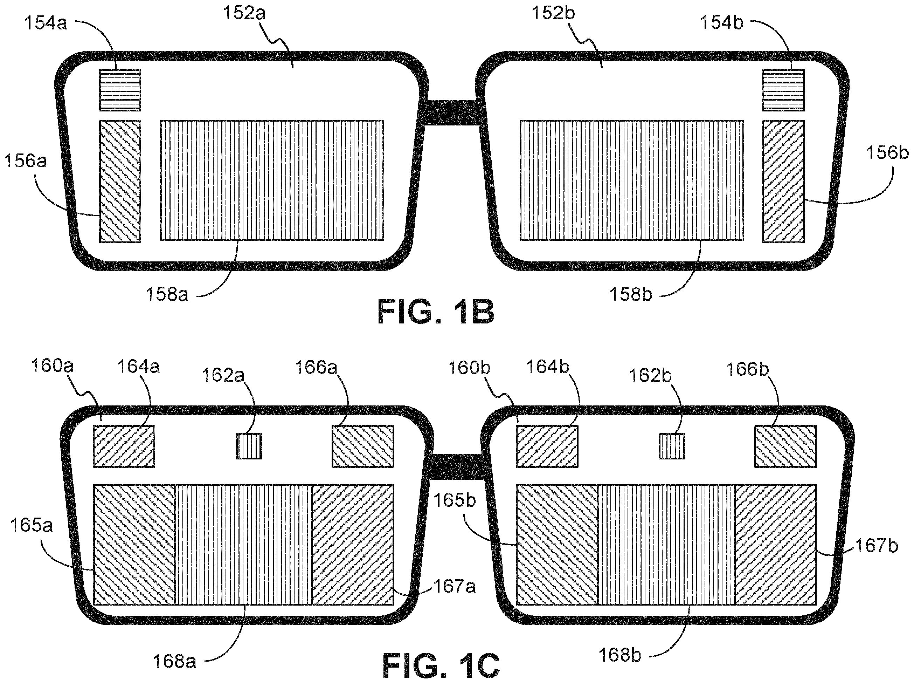

As illustrated in FIGs. 1B and 1C, waveguide displays having in-couplers, out-couplers, and pupil expanders may have various different configurations. An example layout of one binocular waveguide display is illustrated in FIG. 1B. In the example of FIG. 1B, the display includes waveguides 152a, 152b for the left and right eyes, respectively. The waveguides include in-couplers 154a,b, pupil expanders 156a,b, and components 158a,b, which operate as both out-couplers and horizontal pupil expanders. The pupil expanders 156a,b are arranged along an optical path between the in-coupler and the out-coupler. An image generator (not shown) may be provided for each eye and arranged to project light representing an image on the respective in-coupler.

An example layout of another binocular waveguide display is illustrated in FIG.1C. In the example of FIG. 1C, the display includes waveguides 160a, 160b for the left and right eyes, respectively. The waveguides include in-couplers 162a,b. Light from different portions of an image may be coupled by the in-couplers 162a,b to different directions within the waveguides. In-coupled light traveling toward the left passes through pupil expanders 164a,b and 165a,b, while in-coupled light traveling toward the right passes through pupil expanders 166a,b and 167a,b. Having passed through the pupil expanders, light is coupled out of the waveguides using out-couplers 168a,b to substantially replicate an image provided at the in-couplers 162a,b.

In different embodiments, different features of the waveguide displays may be provided on different surfaces of the waveguides. For example (as in the configuration of FIG. 1A), the in-coupler and the out-coupler may both be arranged on the anterior surface of the waveguide (away from the user's eye). In other embodiments, the in-coupler and/or the out-coupler may be on a posterior surface of the waveguide (toward the user's eye). The in-coupler and out-coupler may be on opposite surfaces of the waveguide. In some embodiments, one or more of an in-coupler, an out-coupler, and a pupil expander, may be present on both surfaces of the waveguide. The image generator may be arranged toward the anterior surface or toward the posterior surface of the waveguide. The in-coupler is not necessarily on the same side of the waveguide as the image generator. Any pupil expanders in a waveguide may be arranged on the anterior surface, on the posterior surface, or on both surfaces of the waveguide. In displays with more than one waveguide layer, different layers may have different configurations of in-coupler, out-coupler, and pupil expander.

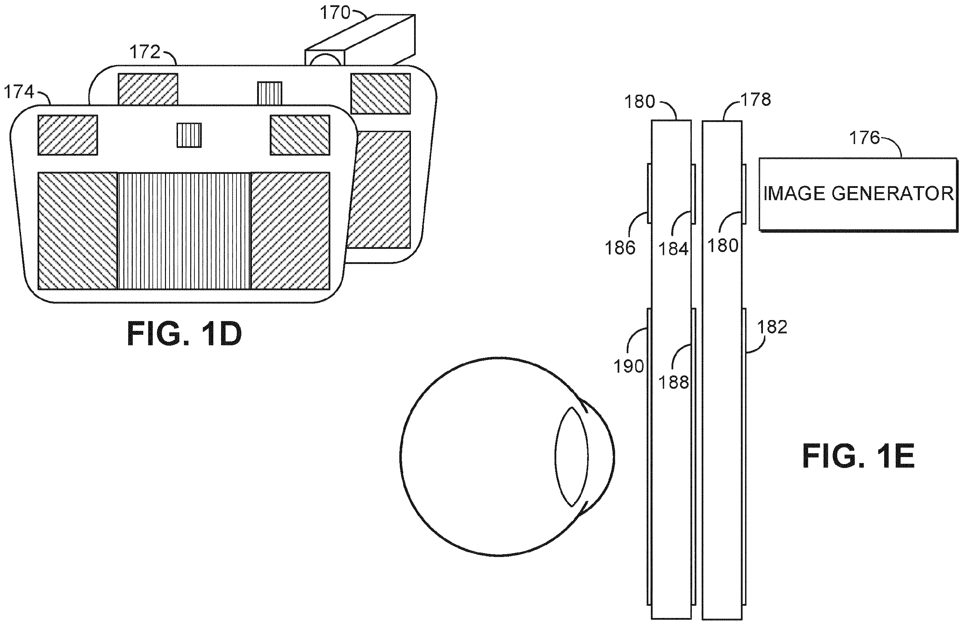

FIG. 1D is a schematic exploded view of a double waveguide display according to some embodiments, including an image generator 170, a first waveguide (WG$_1$) 172, and a second waveguide (WG$_2$) 174. FIG. 1E is a schematic side-view of a double waveguide display according to some embodiments, including an image generator 176, a first waveguide (WG$_1$) 178, and a second waveguide (WG$_2$) 180. The first waveguide includes a first transmissive diffractive in-coupler (DG1) 180 and a first diffractive out-coupler (DG6) 182. The second waveguide has a second transmissive diffractive in-coupler (DG2) 184, a reflective diffractive in-coupler (DG3) 186, a second diffractive out-coupler (DG4) 188, and a third diffractive out-coupler (DG5) 190. Different embodiments may use different arrangements of optical components (such as different arrangements of pupil expanders) on the first and second waveguides.

While FIGs. 1A-1E illustrate the use of waveguides in a near-eye display, the same principles may be used in other display technologies, such as head up displays for automotive or other uses.

**Example Grating Configurations for Wide Field of View.**

According to an aspect of the present disclosure, an optical device providing ultra-high field of view is proposed. Such an optical device is based on higher order diffraction modes and over-wavelength gratings. According to the present disclosure, the optical device comprises waveguides comprising specific diffraction gratings that can be used for in coupling light into the optical device and/or out coupling light from the optical device. According to the present principle, the diffraction gratings are configured to diffract an incident light at a diffraction order having an absolute value equal to or greater than two. According to another aspect of the present disclosure, such an optical device can be used for AR/VR glasses.

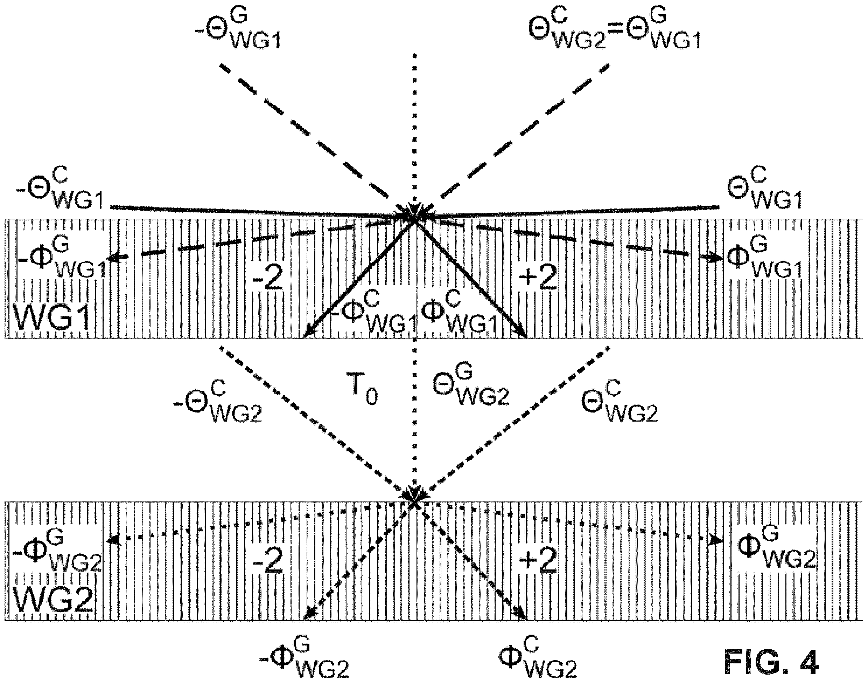

An exemplary system is disclosed in FIG. 4 according to an embodiment of the present disclosure.

FIG. 4 is a schematic cross-sectional view of an in-coupling region of a double waveguide optical device that uses higher order modes (with absolute value of diffraction order higher than one) and over-wavelength gratings for a high Field of View.

In FIG. 4, angles whose name begin with letter $\Theta$ are located in the air. Angles whose name begins with $\Phi$ are located in the waveguides and measure the angle of rays that have been diffracted. As previously discussed, $C$ is a critical ray, either in air or in the waveguide, and $G$ is a grazing ray.

FIG. 4 illustrates an in-coupler portion of an optical device comprising a first optical waveguide WG1 and a second optical waveguide WG2. Such an optical device is configured for guiding an angular range [ $-\Theta_{WG1}^{C}$ , $\Theta_{WG1}^{C}$ ] of an incident light comprising a range of wavelengths. $\Theta_{WG1}^{C}$ corresponds to an incident angle of a critical ray diffracted into the first waveguide WG1 at a critical angle $\Phi_{WG1}^{C}$ , where $\Phi_{WG1}^{C} = sin^{-1} \frac{1}{n_2}$ , wherein $n_2$ is a refractive index of the first waveguide's material. We use $n_3$ as the refractive index of the second waveguide's material. As illustrated in FIG. 4, the first waveguide WG1 is placed in front of the second optical waveguide WG2 according to light propagation direction. As a result, incident light is first transmitted or diffracted by the first waveguide WG1, and then the part of the incident light transmitted by the first waveguide WG1 is transmitted or diffracted by the second waveguide WG2. (As used in this disclosure, light that exits a diffraction grating with diffractive order zero is referred to as being "transmitted," while light that exits the diffraction grating with non-zero diffractive order is referred to as having been diffracted.)

The first waveguide comprises a diffraction grating having an over-wavelength grating's pitch which is configured for second orders of diffraction. This allows coupling of very high angles of incidence into the first waveguide WG1. Example embodiments that use second order diffraction allow for coupling of very high angles of incidence with the use of a larger grating pitch than would be needed if first order diffraction is used.

From FIG. 4, it can be observed that the angular ranges [ $\Theta_{WG1}^G$ , $\Theta_{WG1}^C$ ] and [ $-\Theta_{WG1}^C$ , $-\Theta_{WG1}^G$ ] diffract inside of the first waveguide WG1 into the angular ranges [ $\Phi_{WG1}^C$ ] and [ $-\Phi_{WG1}^C$ , $-\Phi_{WG1}^G$ ], respectively. It can be seen that the angular range [ $\Theta_{WG1}^G$ , $\Theta_{WG1}^C$ ] is a symmetric angular range of the angular range [ $-\Theta_{WG1}^C$ , $-\Theta_{WG1}^G$ ] with respect to the incident axis of the light incident on the optical device.

The angular range between [ $-\Theta_{WG1}^G$ , $\Theta_{WG1}^G$ ], which includes a beam $T_0$ referred to here as a transmitted beam, is transmitted through the diffraction grating of the first waveguide WG1 with a very high efficiency.

Into the first waveguide WG1, the left hand side of the image, represented by negative angles of incident light, will propagate in the negative direction (toward the left) into the waveguide WG1 while the right hand side of the image, represented by positive angles of incident light will propagate in the positive direction (toward the right). In an example embodiment, light coupled into the negative direction travels to a first set of one or more eye pupil expanders (such as eye pupil expanders 164a, 165a of FIG. 1C) before being coupled out of the waveguide by an out-coupler (such as out-coupler 168a of FIG. 1C), while light coupled into the positive direction travels to a second set of one or more eye pupil expanders (such as eye pupil expanders 166a, 167a of FIG. 1C) before being coupled out of the waveguide by the out-coupler.

The transmitted beam $T_0$ has an angular extent from [ $-\Theta_{WG2}^C$ , $\Theta_{WG2}^C$ ], the grazing rays being in the vicinity of the normal. The transmitted beam $T_0$ will diffract on a second grating which is on the second waveguide WG2, and positive angles of incidence will propagate toward the right in the waveguide WG2 while negative angles of incidence will propagate toward the left into WG2.

The second grating is different from the first one in that it has a different pitch size. In some embodiments, the in-coupler diffraction gratings of both waveguides WG1 and WG2 may have a geometrical structure that emphasizes nano jet-waves. The in-coupler gratings may have generally the same cross-sectional shape. In some embodiments, the second grating comprised in the waveguide WG2 has an over-wavelength grating's pitch configured for second orders of diffraction.

According to the present embodiment, the first and second grating are configured through the grating pitch for diffracting the specific respective angular ranges of the light as specified above for a given wavelength of the light as will be shown below.

The following four diffraction equations may be used to calculate the pitch sizes $d_1$ and $d_2$ of the diffraction grating of each of the respective two waveguides WG1 and WG2 and the total field of view coupled by the optical device illustrated on FIG. 3:

$$n_2 sin\Phi_{WG1}^C + n_1 sin\Theta_{WG1}^C = \frac{M\lambda}{d_1}$$

$$n_2 sin\Phi_{WG1}^G + n_1 sin\Theta_{WG1}^G = \frac{M\lambda}{d_1}$$

$$n_3 sin\Phi_{WG2}^C + n_1 sin\Theta_{WG2}^C = \frac{N\lambda}{d_2}$$

$$n_3 sin\Phi_{WG2}^G + n_1 sin\Theta_{WG2}^G = \frac{N\lambda}{d_2}$$

In embodiments in which the host medium is air, $n_1 = 1$. Some values are known, $\sin\Phi^C_{WG1} = 1/n_2$, as well as $\sin\Phi^C_{WG2} = 1/n_3$ and some others are design parameters. According to an embodiment of the present disclosure, $\Phi^G_{WG1}$ and $\Phi^G_{WG2}$ are chosen to approximately equal 75°. M and $N$ correspond respectively to the diffraction order of the first and second diffraction gratings.

It is to be noted that these values are design parameters, and other values can be selected. The values chosen for $\Phi^G_{WG1}$ and $\Phi^G_{WG2}$ may be chosen according to the distance the image has to travel into the waveguide before being extracted, the number of TIR bounces, and the thickness of the waveguide.

According to an example embodiment, $\Theta^G_{WG2}$ is chosen to be -3° for instance. Other values are also possible depending on the design conditions, such as whether it is desired to superimpose the left and right images in the middle of the final image, or if no crossing of the left and right images is desired. In an example embodiment, the value of -3° will imply that the final image composed of the left and right images comprises a black band in the middle. However, in some applications, the presence of such a band is not desired, and other values for $\Theta^G_{WG2}$ may be selected.

The previous set of equations may be solved for the pitch sizes. From the last one:

$$d_2 = \frac{N\lambda}{n_3 sin\Phi^G_{WG2} + n_1 sin\Theta^G_{WG2}}$$

and replacing in the previous equation, we can get the critical incident angle of the second grating:

$$sin\Theta^C_{WG2} = \left(-1 + \frac{N\lambda}{d_2}\right)/n_1$$

Then, for an embodiment in which $\Theta^C_{WG2} = \Theta^G_{WG1}$,

$$d_1 = \frac{M\lambda}{n_2 sin\Phi^G_{WG1} + n_1 sin\Theta^G_{WG1}}$$

and

$$sin\Theta^C_{WG1} = \left(-1 + \frac{M\lambda}{d_1}\right)/n_1.$$

These equations may be used to calculate the pitch sizes, partial field of views of each waveguide and the final field of view. Table 1 shows some example practical parameters and the calculated values according to the previously solved set of equations:

**Table 1.**

| | | | Design Parameters | Calculated |
|---|---|---|---|---|
| | | $M, N$ | 2 | |
| | | $\lambda$ | 625nm | |
| WG2 | | $n_3$ | 1.52 | |
| | | $\Theta^G_{WG2}$ | -3° | |
| | | $\Phi^G_{WG2}$ | 75° | |
| | | $d_2$ | | 822nm |
| | | $\Theta^C_{WG2}$ | | 30.1 ° |
| | | FoV (WG2) | | 54.2° |
| WG1 | | $n_2$ | 1.52 | |
| | | $\Theta^G_{WG1}$ | 30.1° | |
| | | $\Phi^G_{WG1}$ | 75° | |
| | | $d_1$ | | 635nm |
| | | $\Theta^C_{WG1}$ | | 71.8° |
| | | FoV (WG1) | | 83.5° |
| WG1 & WG2 | FoV (WG1 & WG2) | | | 137.7° |

It is also to be noted that in the example given above, refractive indexes of respectively the first waveguide and the second waveguide are the same, $n_3 = n_2$, and the refractive index of the host medium is assumed to be air, with $n_1 = 1$. However, in some embodiments, the first and second waveguides have different refractive indexes.

As seen in Table 1, the example system achieves an field of view of 137.7 degrees, which is more than enough to cover the total human field of view where stereopsis is effective for human vision, which is around 114 degrees.

As seen in Table 1, with the use of second-order diffraction, the pitches of both diffraction gratings are greater than a wavelength of red light, for example greater than 625nm. An analogous embodiment using first-order diffraction by both in-couplers would use $d_1 = 317.5nm$ and $d_2 = 411nm$. With the use of first-order diffraction, relatively small grating pitches are called for to provide a wide field of view as described herein. For example, the value of $d_2 = 411nm$ is smaller than a wavelength of blue light, around 460nm, and the value of $d_1 = 317.5nm$ is smaller even than the shortest visible wavelength, around 380nm. Such embodiments may be implemented. However, the small size of the grating pitches may make fabrication difficult. The use of higher diffractive orders allows for a wider field of view with in-couplers having a greater pitch. For example, where the first diffractive in-coupler has a first grating pitch, $d_1$, and is configured to use a diffractive order M, the value of $d_1/M$ may be less than 380nm even though $d_1$ itself may (if $M > 1$) be larger. Similarly, where the second diffractive in-coupler has a second grating pitch, $d_2$, and is configured to use a diffractive order $N$, the value of $d_2/N$ may be less than 460nm even though $d_2$ itself may (if $N > 1$) be larger. In some embodiments, the first and second in-couplers use different diffractive orders.

In some embodiments, the parameters of the in-couplers may be within 20% of the parameters as calculated above. In some embodiments, the parameters of the in-couplers may be within 10% of the parameters as calculated above.

In the parameters as calculated in Table 1, the second diffractive in-coupler has a second grating pitch, $d_2$, that is about 1.29 times as great as a first grating pitch, $d_1$, of the first diffractive in-coupler. In some embodiments, the second diffractive in-coupler has a second grating pitch, $d_2$, that is between 1.2 times and 1.4 times as great as a first grating pitch, $d_1$, of the first diffractive in-coupler.

In some embodiments, with changes to the index of refraction of the waveguides, a field of view approaching 180 degrees can be achieved for one wavelength with two waveguides. With a set of six waveguides, a full RGB system may be implemented. By multiplexing more than one wavelength per waveguide, as described in greater detail below, a full RGB system may be implemented using four waveguides.

According to an embodiment of the present disclosure, the diffraction grating of each the waveguides WG1 and WG2 comprises a base pattern comprising at least one dielectric material. The base pattern is configured to generate edge waves associated with the edges of the base pattern from the light incident on the diffraction grating. Such a base pattern is also referenced as a nanojet wave element in the following. In the following, an exemplary geometry of the base pattern will be presented.

Other embodiments of geometry for a diffraction grating can also be used, such as the ones disclosed in EP3671293A1 cited above. Also, a set of equations is presented to demonstrate the input from the edge diffraction phenomenon disclosed in "Near field focusing by edge diffraction", A. Boriskin, V. Drazic, R. Keating, M. Damghanian, O. Shramkova, L. Blondé, Optics Letters, vol. 43, Issue 16, pp 4053-4056 (2018) in the single element of the period into the total response of the diffraction grating.

Simulations were performed using the COMSOL Multiphysics software. The simulations assume that the system is illuminated by a linearly-polarized plane wave E = {0, 0, 1} (TE). The effect of the parameters of the nano jet-wave element on the functionality of the system is considered. As it was demonstrated in the document cited above, the nanojet (NJ) beam-forming phenomenon is associated with the edges of the system. Based on the analysis of the wedge diffraction phenomenon as disclosed in Boriskin et al., it is possible to determine the deviation angle $\theta_B$ of the nanojet beam in the denser medium in the case of normal incidence of electromagnetic wave ($\theta_i = 90°$ with respect to a horizontal axis).

$$\theta_B \approx \frac{90° - sin^{-1}\left(\frac{n_L}{n_H}\right)}{2}$$

where $n_L$ is the refractive index of host medium, $n_H$ is the refractive index of higher index material, according to an embodiment of the present disclosure.

The creation of a nanojet beam may be understood as the result of constructive interference between the edge wave diffracted by the vertical edge and refracted plane wave. Finally, the edge wave (EW) will propagate inside the wedge with the angle of deviation equal to $\Theta_{EW} \approx 2\Theta_B$

It shall be also noted that in the following, unless specified otherwise, $n_1 = n_L$ is the refractive index of the host medium, $n_H$ represents the refractive index of the high index material, with $n_L < n_{2,3} < n_H$, where $n_2$ and $n_3$ may be the indices of the substrates (which may be glass). In the simulated examples, $n_H$ is the same for all diffraction gratings, but in some embodiments it may be different for each of the optical waveguides.

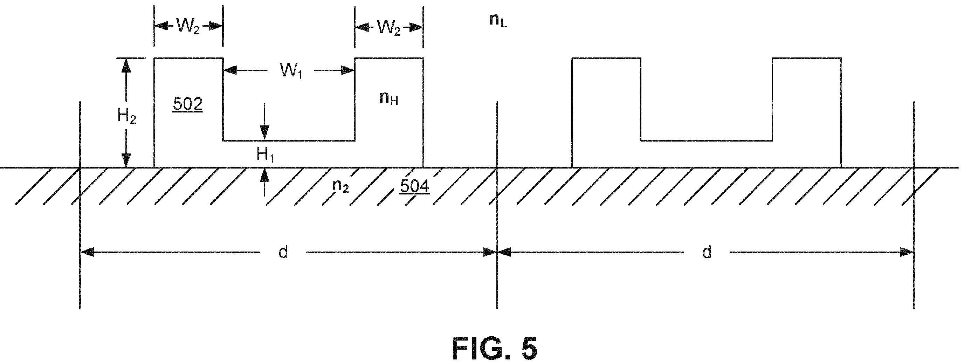

An exemplary geometry of the edge wave or nanojet beam wave element that is used in the dual system illustrated in FIG. 4 is described below with reference to FIG. 5.

According to this example, the base pattern consists in a block 502 of single material having a refractive index $n_H$ and having a U shape, placed on top of a substrate 504 having refractive index $n_2$. On FIG. 5, it can be seen, that the block 502 has two blocks of single material having a refractive index $n_H$ of height $H_2$ and width $W_2$ separated by a band of same single material having a refractive index $n_H$ of height $H_1$ and width $W_1$. Such a base pattern is placed in a host medium with refractive index $n_L$, for instance air.

Geometry wise, a high index $n_H$ single material may be deposited and e-beamed on a glass substrate ME3. There is no glass etching required, and no multiple e- beam lithography, thus providing potential advantages for the micro-fabrication.

A working example is to use the pitch sizes calculated in Table 1 given above and a material of index $n_H$ = 2.105 for feature 502. The in-coupler grating of the first waveguide WG1 will have a pitch size $d_1$ = 635$nm$ and the U-shaped structure will have $W_1$ = 160$nm$, $H_1$ = 20$nm$, $W_2$ = 140$nm$, and $H_2$ = 225$nm$. For the second waveguide WG2, the pitch size is $d_1$ = 822$nm$ and the parameters are $W_1$ = 260$nm$, $H_1$ = 50$nm$, $W_2$ = 120$nm$, and $H_2$ = 225$nm$.

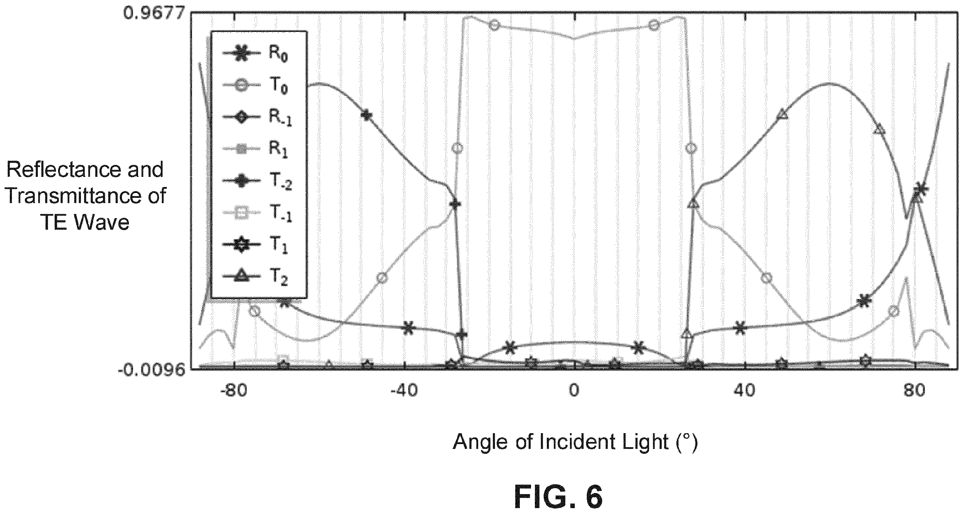

FIG. 6 illustrates the simulated diffraction performances of the in-coupler grating for the first waveguide WG1. It can be seen that $\pm 2$ diffraction orders have high efficiency and high uniformity for the angular ranges [-72, -30] and [30,72] degrees and it has very high transmission efficiency for $\pm 30$ degrees field of view.

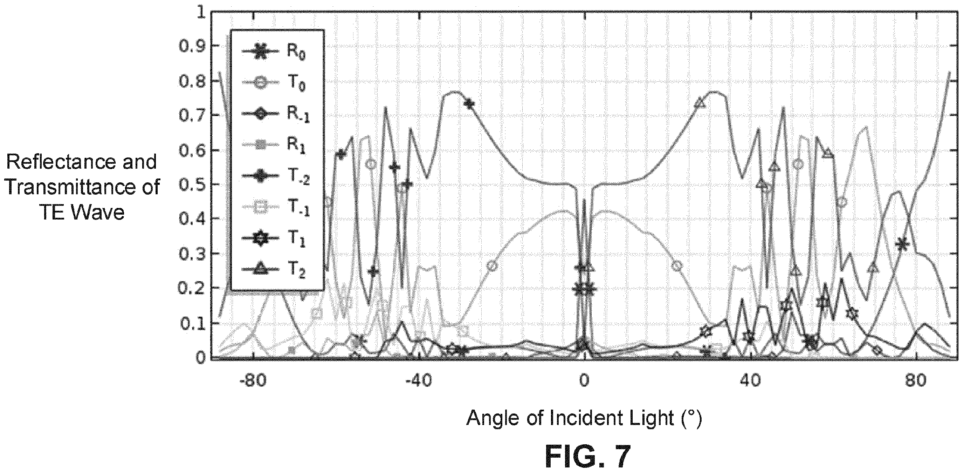

FIG. 7 illustrates the performances for the grating of the second waveguide WG2. It can be seen that for the transmitted field of view of $\pm 30$ degrees through the grating of the first waveguide WG1, very high diffraction efficiencies and uniformities over this angular range is achieved.

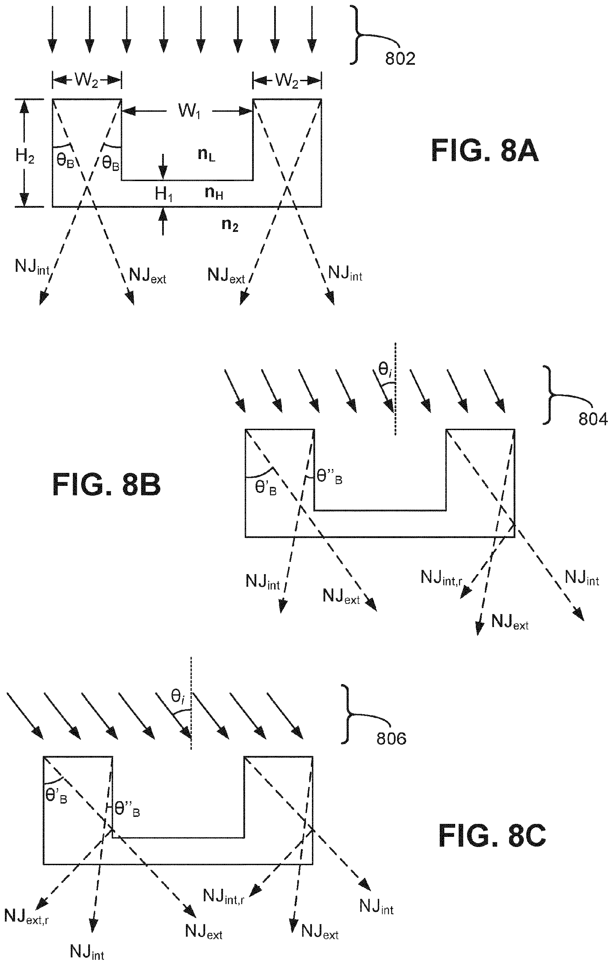

FIGs. 8A-8C illustrate cross-sectional views of the U-shape base pattern illustrated in FIG. 5, with a normal incident electromagnetic wave 802 (FIG. 8A), with $\theta_i = 0°$ with respect to the normal axis y), and with oblique incident electromagnetic waves 804 (FIG. 8B) and 806 (FIG. 8C).

Some embodiments use a symmetrical U-shaped meta-element combining two similar dielectric blocks with refractive index $n_H$, width $W_2$ and height $H_2$. In some embodiments, a third block with the refractive index $n_H$, width $W_1$ and height $H_1$ is placed between (see FIG. 8A) and $n_L$ is the refractive index of the host medium (e.g. air), with $n_H < n_2$

< $n_H$. In an example nanojet-based element system, four nanojets are associated with two external and two internal edges of the blocks with the height $H_2$. Nanojets generated by the internal edges of the system are indicated by $NJ_{int}$, and nanojets generated by the external edges of the system are indicated by $NJ_{ext}$. For a case of normal incidence, the radiation angles of all nanojets are the same ($\theta_B$). The existence of two additional internal edges leads to the decrease of the intensity of the central nanojet (in a case of normal incidence we observe it along the axis of the symmetry of single block meta-elements with the total width $W_1 + 2W_2$ and height $H_2$) and to the increase of the intensity of the side blocks.

For the inclined incidence, there is a first pair of nanojets with radiation angles $\theta'_B$ and a second pair with radiation angles $\theta''_B$ (see FIGs. 8B and 8C):

$$\theta'_B \approx \frac{90° - sin^{-1}\left(\frac{n_L}{n_H}\right)}{2} + \frac{\theta_i}{2}$$

$$\theta''_B \approx \frac{90° - sin^{-1}\left(\frac{n_L}{n_H}\right)}{2} - \frac{\theta_i}{2}$$

The reflection of the generated nanojets ($NJ_{int,r}$ and $NJ_{ext,r}$) by the edges of the constitutive parts of the meta-elements leads to the creation of the new nanojet hot spots (cross points between $NJ_{int,r}$ and $NJ_{ext}$, see FIGs. 8B and 8C and between $NJ_{ext,r}$ and $NJ_{int}$, see FIG. 8C) in some proximity to the substrate and to nonsymmetrical redistribution of the total power inside the meta-elements. For example, the comparison of FIGs. 8B and 8C demonstrates the effect of the angles of electromagnetic wave incidence on the nanojets generated at the angles $\theta'_B$ due to the reflection by the different edges of the system.

Example embodiments as shown above can suppress ±1 diffraction orders and dramatically increase the intensities of ±2 diffraction orders for small angles of incidence and decrease them for high angles of incidence.

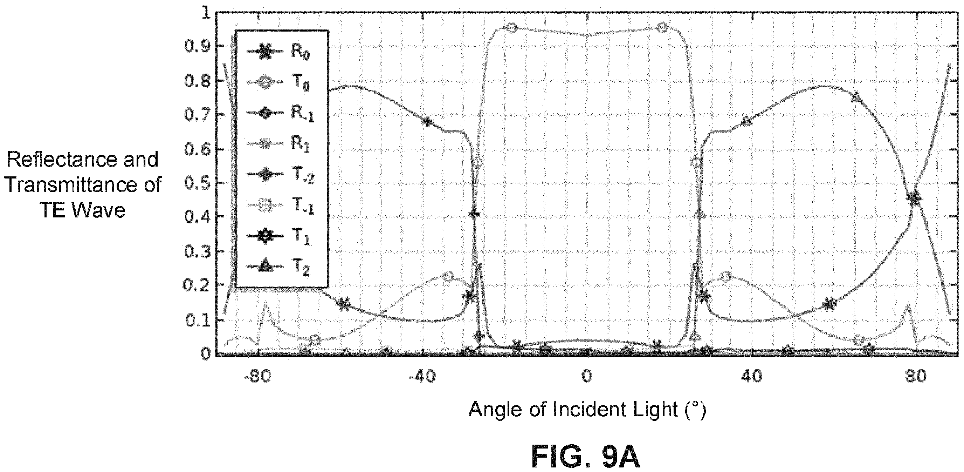

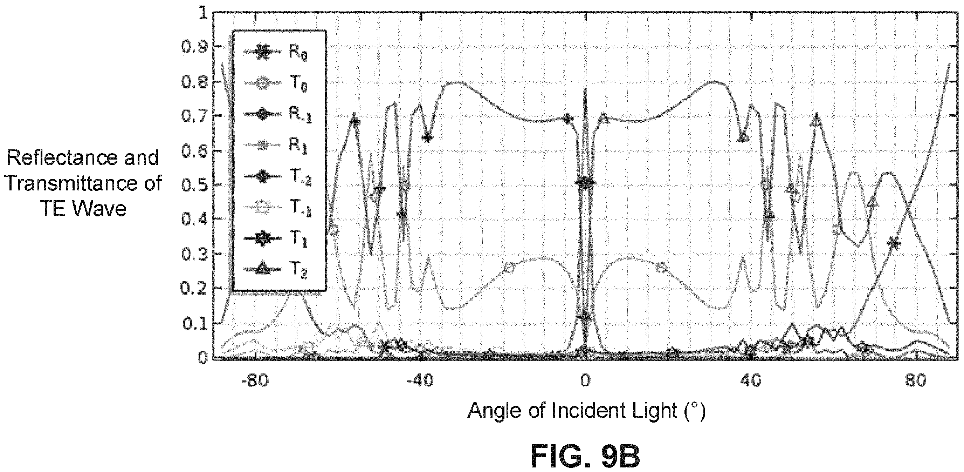

It may further be observed that the U-shaped topology may improve the diffraction uniformity. With appropriate selection of the refractive index $n_H$ of the elements of the diffraction grating and appropriately selecting the size of these elements, it is possible to increase the intensity of coupling into the corresponding waveguides. The diffraction performances of two diffraction gratings with the pitch sizes calculated in Table 1 above and material of index $n_H$ = 2.5 for the photo polymer are presented in FIGs. 9A-9B. The grating of the first waveguide, with simulation results shown in FIG. 9A, has a pitch size $d_1$ = 635$nm$ and the U-shaped structure has $W_1$ = 180$nm$, $H_1$ = 10$nm$, $W_2$ = 120$nm$, $H_2$ = 180$nm$. For the second waveguide, with simulation results show in FIG. 9B, the pitch size is $d_2$ = 822$nm$ and the parameters are $W_1$ = 280$nm$, $H_1$ = 20$nm$, $W_2$ = 120$nm$, $H_2$ = 170$nm$.

According to another embodiment of the present disclosure, an optical device providing a high field of view for an RGB image is disclosed. Consider the combination of the waveguides disclosed above for a full RGB system. By configuring diffraction gratings for three wavelengths corresponding to red (625nm), green (530nm) and blue (460nm) colors, example embodiments provide a full RGB system using four waveguides instead of six.

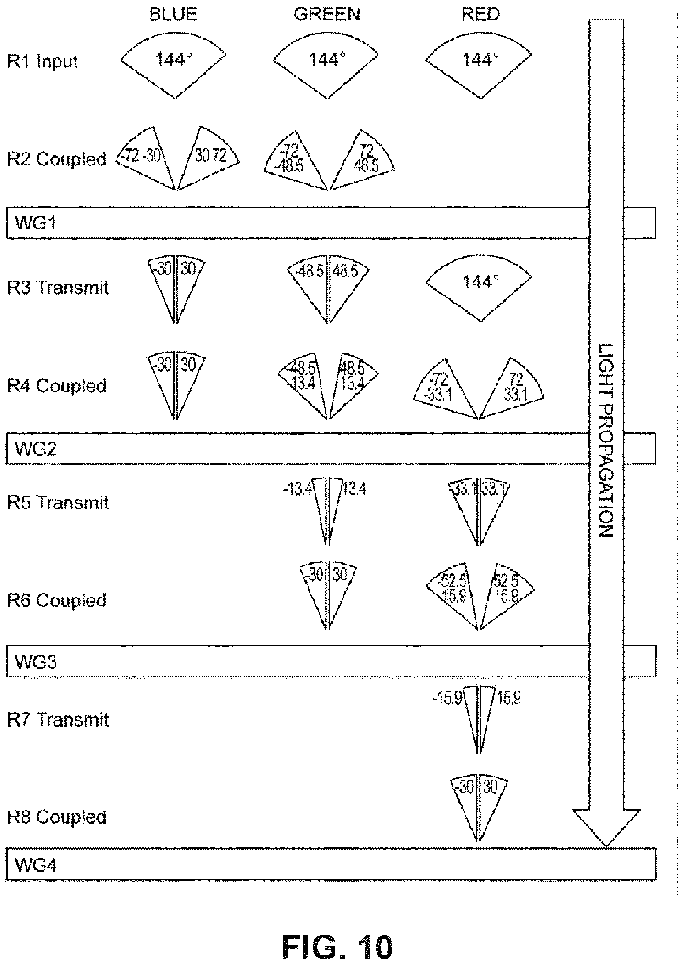

FIG. 10 shows schematically an exemplary RGB system according to the present embodiment. In order to read the figure correctly, the four waveguides (WG1-WG4) are presented starting from the waveguide WG1. As an input, there is an RGB image with a field of view of 144 degrees in each color red, green, blue and the three colors are superimposed. (in FIG. 10, the waveguides are shown disjointed in order to illustrate the difference in behavior of each color.)

In example embodiments, the four waveguides are placed on top of each other, but not in contact. A distance of at least some nm, for example 15nm or greater, may be used.

FIG. 10 shows (row R1) the input field of view per color, and the second row (R2) shows the angular space in each color that gets coupled into the first waveguide WG1. The next row (R3) shows the angular space that is transmitted through the waveguide WG1 for each color.

For the second waveguide WG2, the illustrations show again (R4) the angular space that is coupled into that waveguide, and so on down to the last one. It is seen that four waveguides can couple a very wide field of view of 144 degrees by multiplexing different combination of colors and angular space.

The grating for the first waveguide (WG1) is configured for the blue color to get high diffraction efficiency of ±2 diffraction orders in the angular ranges of [30, 72] and [-72, -30] degrees. The pitch size of this grating is $d_1 = 267nm$ and the U-shaped structure has $W_1 = 120nm$, $H_1 = 20nm$, $W_2 = 100nm$, $H_2 = 160nm$.

At the wavelength corresponding to the green color, such a diffraction grating provides high diffraction efficiency for $\pm2$ diffraction orders in the angular ranges [-72, -48.5] and [48.5, 72] degrees and high transmittivity of 0-order at [-48.5, 48.5] degrees. The red color gets through the diffraction grating with high transmittivity of 0 order.

The grating for the second waveguide (WG2) is configured to couple the rest of the blue color with high diffraction efficiency of $\pm2$ diffraction orders in the angular range [-30, 30] degrees. It has a pitch size $d_2 = 605nm$ and the parameters are $W_1 = 180nm$, $H_1 = 30nm$, $W_2 = 100nm$, $H_2 = 160nm$. At the green color this diffraction grating has intensive $\pm2$ diffraction orders in the angular ranges [-48.8, -13.4] and [13.4, 48.8] degrees and high transmittivity of 0-order at [-13.4, 13.4] degrees. At the wavelength corresponding to the red color, this diffraction grating provides high diffraction efficiency of $\pm2$nd diffraction orders in the angular ranges [-72, -33.1] and [33.1, 72] degrees and high transmittivity of 0-order at [-33.1, 33.1] degrees.

The grating for the third waveguide (WG3) is configured for the green color to get high diffraction efficiency of $\pm2$nd diffraction orders in the angular range [-30, 30] degrees. It has a pitch size $d_3 = 697nm$ and the U-shaped structure has $W_1 = 220nm$, $H_1 = 30nm$, $W_2 = 110nm$, $H_2 = 180nm$.

At the wavelength corresponding to the red color this diffraction grating provides high diffraction efficiency of $\pm2$ diffraction orders in the angular ranges [-52.5, -15.9] and [15.9, 82.5] degrees and high transmittivity of 0-order at [-15.9, 15.9] degrees. The grating for the fourth waveguide (WG4) is configured for the red color to get high diffraction efficiency of $\pm2$ diffraction orders in the angular range [-30, 30] degrees. It has a pitch size $d_4 = 822nm$ and the parameters are $W_1 = 260nm$, $H_1 = 50nm$, $W_2 = 120nm$, $H_2 = 225nm$.

In some embodiments using a stack of four waveguides, $d_1 < d_2 < d_3 < d_4$.

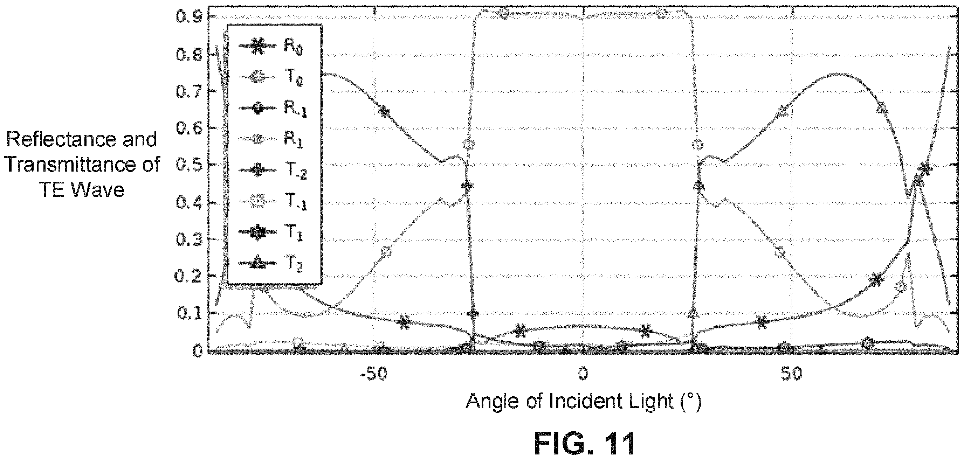

The diffraction performances of four diffraction gratings with the material of index $n_H = 2.105$ for the photo polymer are presented in FIGs. 11-19.

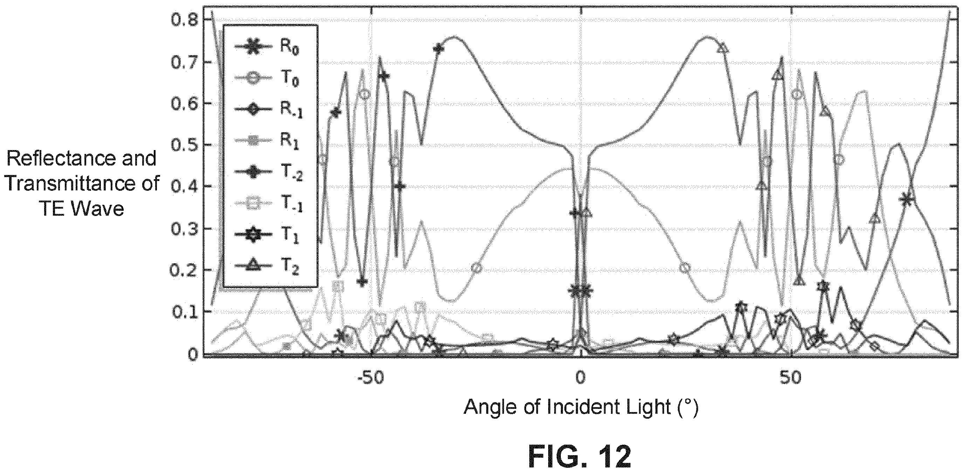

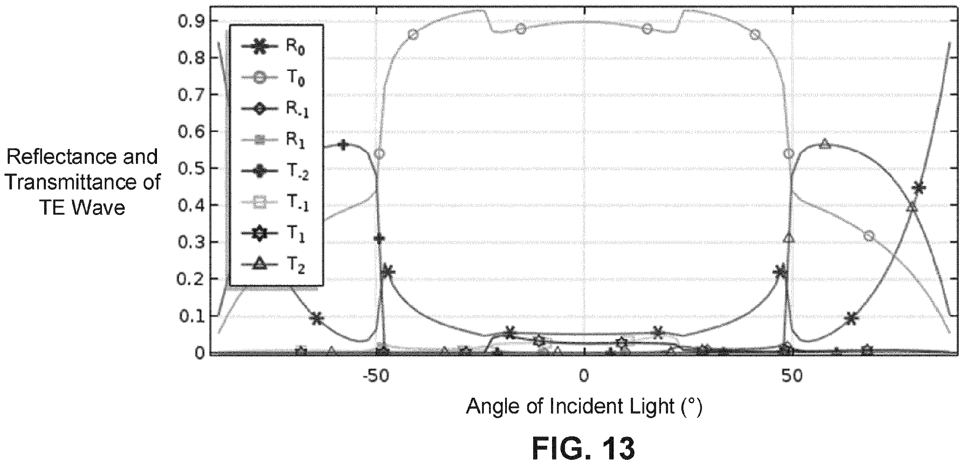

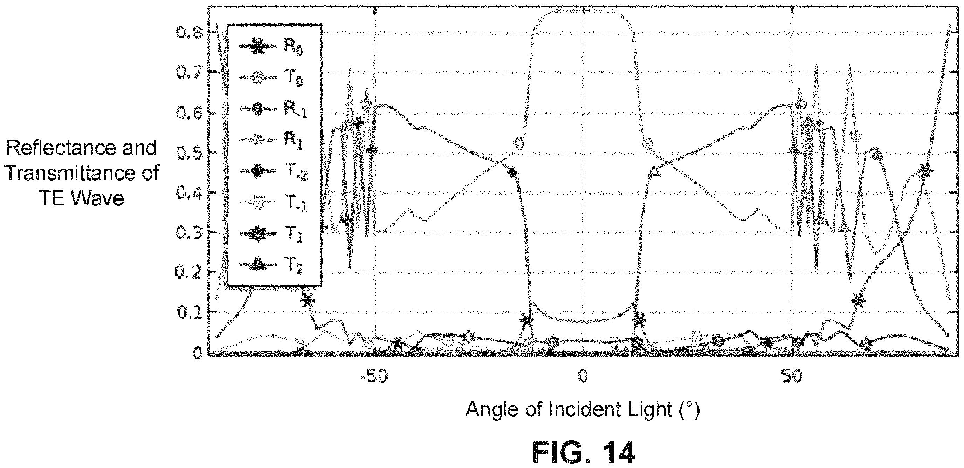

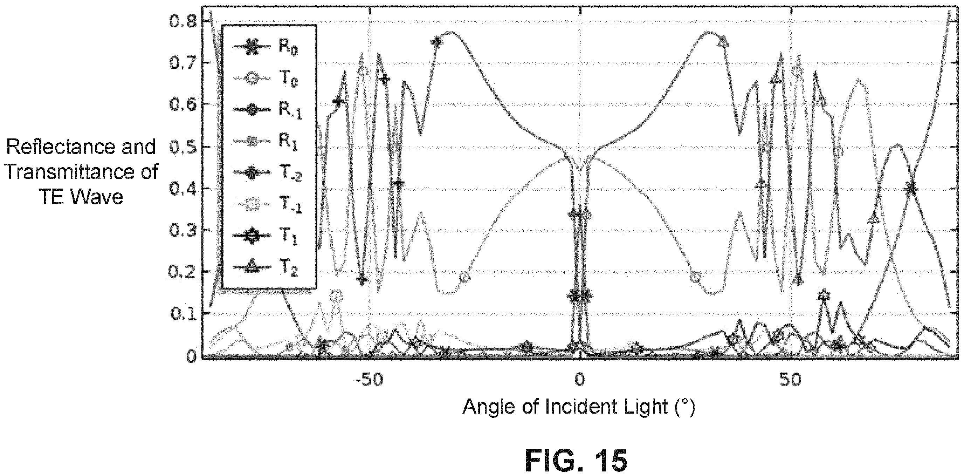

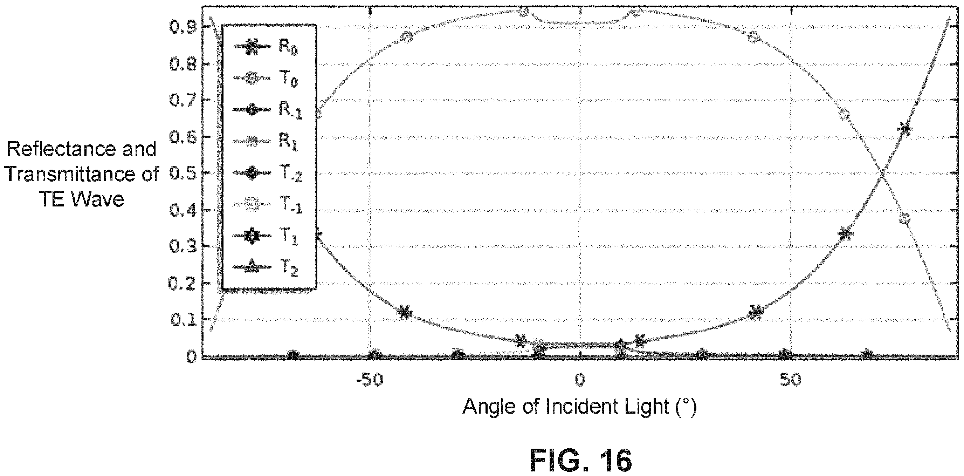

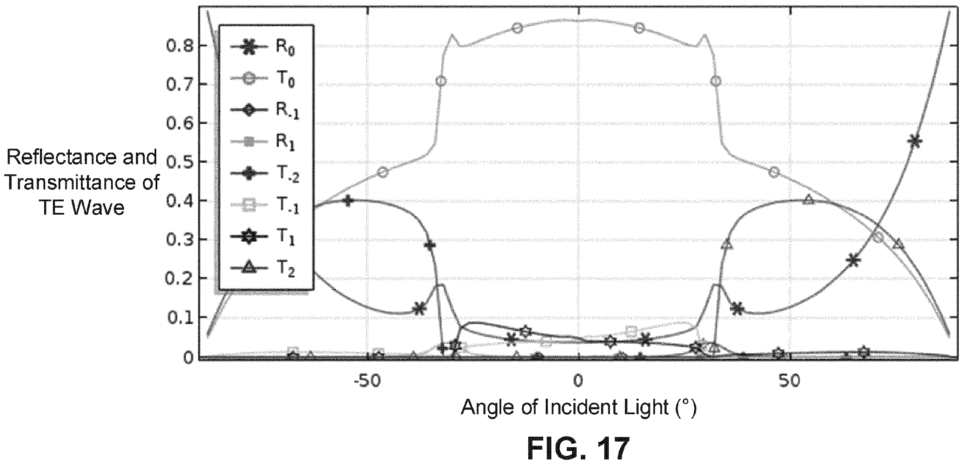

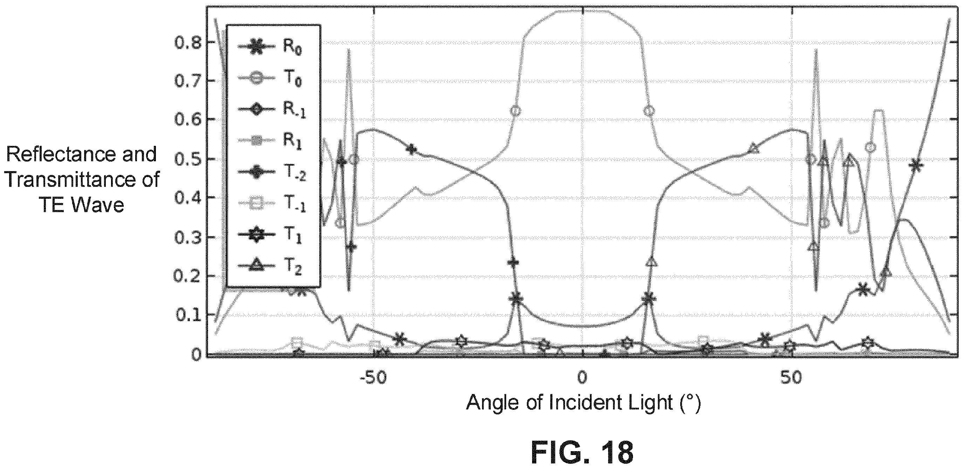

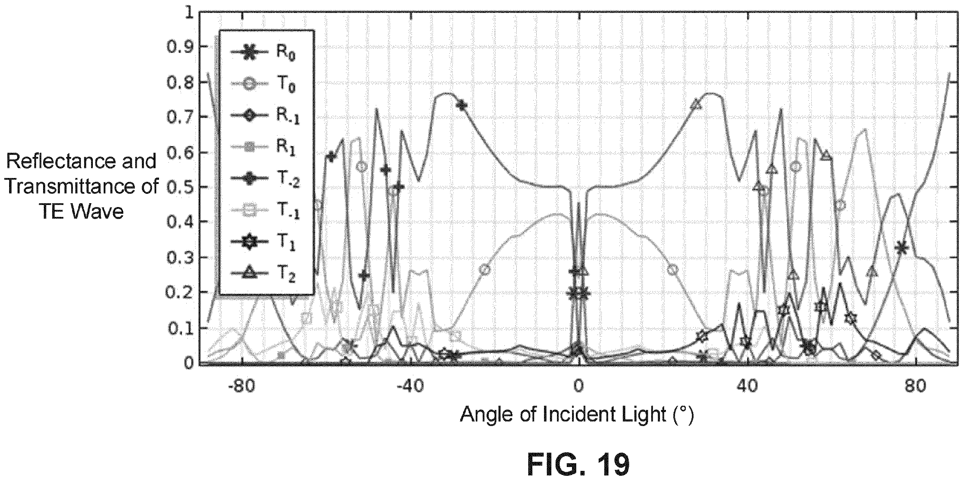

FIG. 11 illustrates the diffraction performances for the blue color in the first waveguide WG1. FIG. 12 illustrates the diffraction performances for the blue color in the second waveguide WG2. FIG. 13 illustrates the diffraction performances for the green color in the first waveguide WG1. FIG. 14 illustrates the diffraction performances for the green color in the second waveguide WG2. FIG. 15 illustrates the diffraction performances for the green color in the third waveguide WG3. FIG. 16 illustrates the diffraction performances for the red color in the first waveguide WG1. FIG. 17 illustrates the diffraction performances for the red color in the second waveguide WG2. FIG. 18 illustrates the diffraction performances for the red color in the third waveguide WG3. FIG. 19 illustrates the diffraction performances for the red color in the fourth waveguide WG4.

It is to be noted that the smallest pitch size is of 467nm for the first waveguide WG1 is bigger than the blue wavelength. In contrast, use of $\pm1$ diffraction orders for the blue color would call for a grating pitch smaller than 300nm. The use of a U-shaped structure exhibiting edge wave effects to configure the gratings for the $\pm2$ order of diffraction permits the use of grating periods that are substantially bigger.

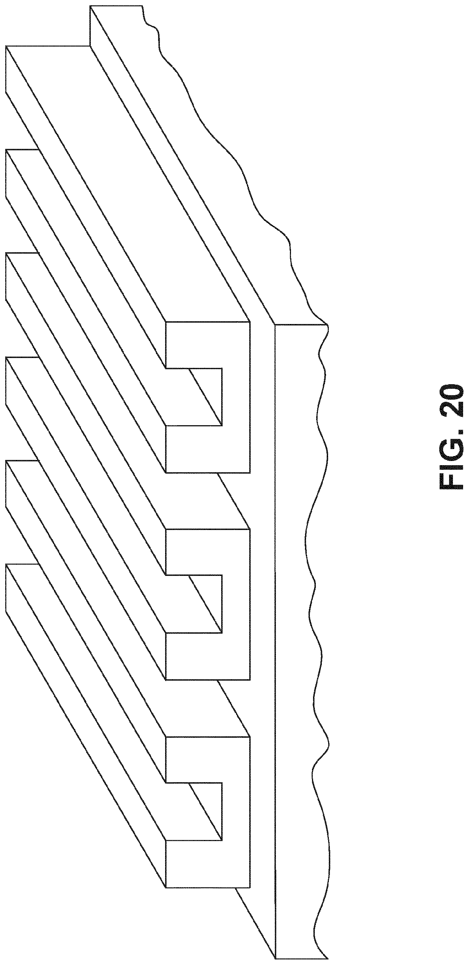

FIG. 20 illustrates a portion of an exemplary diffraction grating as may be used in one or more of the waveguides disclosed above. In the embodiment of FIG. 20, the base pattern of the diffraction grating has a U-shape structure as illustrated in FIG. 5. According to an embodiment of the present disclosure, the optical device according to any one of the embodiments disclosed above can be used as waveguides in AR/VR glasses. According to this embodiment, the waveguides can be configured for in-coupling light incoming into the optical device or for extracting light out of the optical device depending on where the diffraction grating is formed on the waveguides.

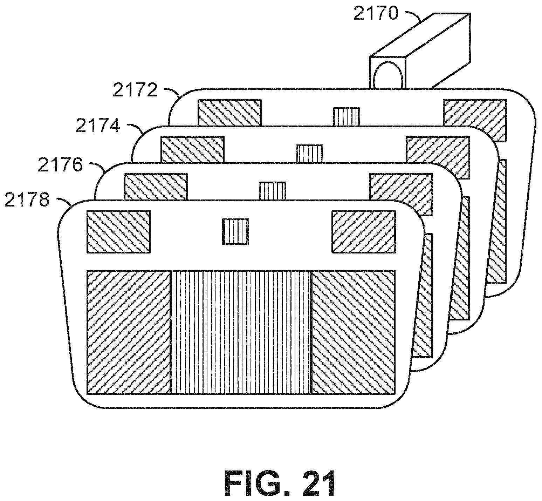

According to an embodiment of the present disclosure, an eyewear apparatus is disclosed which comprises an optical device according to any one of the embodiments disclosed above. For example, a monocular or binocular waveguide display as illustrated in FIG. 1C may include a stack of two or more waveguides as illustrated in FIG. 1D. In the example of FIG. 21, an image generator 2170 may provide an image that is coupled into waveguides 2172, 2174, 2176, 2178. The in-coupler of waveguide 2172 may be configured as described above for WG1 in FIG. 10. The in-coupler of waveguide 2174 may be configured as described above for WG2 in FIG. 10. The in-coupler of waveguide 2176 may be configured as described above for WG3 in FIG. 10. The in-coupler of waveguide 2178 may be configured as described above for WG4 in FIG. 10. In some embodiments, two sets of image generators and accompanying waveguides may be used to provide a stereoscopic display in a set of AR or VR glasses.

In the present disclosure, modifiers such as "first," "second," "third," and the like are sometimes used to distinguish different features. These modifiers are not meant to imply any particular order of operation or arrangement of components. Moreover, the terms "first," "second," "third," and the like may have different meanings in different embodiments. For example, a component that is the "first" component in one embodiment may be the "second" component in a different embodiment.

**Claims**

1. An optical device comprising:

   a first waveguide (WG1) having a first diffractive in-coupler, the first diffractive in-coupler being configured to couple a first angular range of incident light into a negative direction in the first waveguide, to couple a second angular range of incident light into a positive direction in the first waveguide, the first and second angular ranges being non-overlapping, and to transmit at least a portion of the incident light not coupled into the first waveguide; and

   a second waveguide (WG2) having a second diffractive in-coupler, the second diffractive in-coupler being configured to couple at least a portion of the incident light transmitted by the first diffractive in-coupler, the second waveguide being configured to couple a third angular range of the incident light, the third angular range including angles between the first angular range and the second angular range.

2. The optical device of claim 1, wherein:

   the third angular range comprises a range of angles from $-\Theta_{WG2}^{C}$ to $\Theta_{WG2}^{C}$, where, for at least one wavelength $\lambda$ of the incident light, $-\Theta_{WG2}^{C}$ is an angle of the incident light that is coupled to a negative critical angle in the second waveguide and $\Theta_{WG2}^{C}$ is an angle of the incident light that is coupled to a positive critical angle in the second waveguide.

3. The optical device of claim 2, wherein the first angular range comprises a range of angles less than $-\Theta_{WG2}^{C}$ and the second angular range comprises a range of angles greater than $\Theta_{WG2}^{C}$.

4. The optical device of any one of the preceding claims, wherein the first, second, and third angular ranges together span a field of view of greater than sixty degrees.

5. The optical device of any one of the preceding claims, wherein the first diffractive in-coupler has a first grating pitch, $d_1$, and is configured to use a diffractive order $M$, and wherein $d_1/M$ is less than 380nm; and the second diffractive in-coupler has a second grating pitch, $d_2$, and is configured to use a diffractive order $N$, and wherein $d_2/N$ is less than 460nm.

6. The optical device of any one of the preceding claims, wherein:

   the first diffractive in-coupler has a first grating pitch, $d_1$, where the first grating pitch is within 20% of 635nm; and
   the second diffractive in-coupler has a second grating pitch, $d_2$, where the second grating pitch is within 20% of 822nm.

7. The optical device of any one of the preceding claims, wherein the second diffractive in-coupler has a second grating pitch, $d_2$, that is between 1.2 times and 1.4 times as great as a first grating pitch, $d_1$, of the first diffractive in-coupler.

8. The optical device of any one of the preceding claims, wherein at least one of the first and the second diffractive in-couplers has a base pattern with a U-shaped profile.

9. The optical device of any one of the preceding claims, further comprising:

   an image generator operative to direct light representing an image onto the first diffractive in-coupler;
   a first diffractive out-coupler on the first waveguide; and
   a second diffractive out-coupler on the second waveguide.

10. A method comprising:

    directing incident light on a first diffractive in-coupler of a first waveguide (WG1);
    coupling, by the first diffractive in-coupler, a first angular range and a second angular range of the incident light into the first waveguide, the first and second angular ranges being non-overlapping, the first angular range being coupled to a negative direction in the first waveguide and the second angular range being coupled to a positive direction in the first waveguide;

transmitting, through the first diffractive in-coupler to a second diffractive in-coupler of a second waveguide (WG2) at least a portion of the incident light not coupled into the first waveguide; and

coupling, by the second diffractive in-coupler, a third angular range of the incident light, the third angular range including angles between the first angular range and the second angular range.

11. The method of claim 10, wherein:

the third angular range comprises a range of angles from $-\Theta^C_{WG2}$ to $\Theta^C_{WG2}$ , where, for at least one wavelength $\lambda$ of the incident light, $-\Theta^C_{WG2}$ is an angle of the incident light that is coupled to a negative critical angle in the second waveguide and $\Theta^C_{WG2}$ is an angle of the incident light that is coupled to a positive critical angle in the second waveguide.

12. The method of claim 11, wherein the first angular range comprises a range of angles less than $-\Theta^C_{WG2}$ and the second angular range comprises a range of angles greater than $\Theta^C_{WG2}$.

13. The method of any one of claims 10-12, wherein the first, second, and third angular ranges together span a field of view of greater than sixty degrees.

14. The method of any one of claims 10-13, wherein:

the first diffractive in-coupler has a first grating pitch, $d_1$, where the first grating pitch is within 20% of 635nm; and
the second diffractive in-coupler has a second grating pitch, $d_2$, where the second grating pitch is within 20% of 822nm.

15. The method of any one of claims 10-14, wherein the second diffractive in-coupler has a second grating pitch, $d_2$, that is between 1.2 times and 1.4 times as great as a first grating pitch, $d_1$, of the first diffractive in-coupler.

**Patentansprüche**

1. Optische Vorrichtung, umfassend:

einen ersten Wellenleiter (WG1) mit einem ersten diffraktiven Einkoppler, wobei der erste diffraktive Einkoppler dafür konfiguriert ist, einen ersten Winkelbereich einfallenden Lichts in negative Richtung in den ersten Wellenleiter einzukoppeln, einen zweiten Winkelbereich einfallenden Lichts in positive Richtung in den ersten Wellenleiter einzukoppeln, wobei der erste und der zweite Winkelbereich sich nicht überlappen, und mindestens einen Teil des nicht in den ersten Wellenleiter eingekoppelten einfallenden Lichts zu übertragen; und
einen zweiten Wellenleiter (WG2) mit einem zweiten diffraktiven Einkoppler, wobei der zweite diffraktive Einkoppler dafür konfiguriert ist, mindestens einen Teil des durch den ersten diffraktiven Einkoppler übertragenen einfallenden Lichts einzukoppeln, wobei der zweite Wellenleiter dafür konfiguriert ist, einen dritten Winkelbereich des einfallenden Lichts einzukoppeln, wobei der dritte Winkelbereich Winkel zwischen dem ersten Winkelbereich und dem zweiten Winkelbereich einschließt.

2. Optische Vorrichtung nach Anspruch 1, wobei:

der dritte Winkelbereich einen Bereich von Winkeln zwischen $-\Theta^C_{WG2}$ und $\Theta^C_{WG2}$ umfasst, wobei, für mindestens eine Wellenlänge $\lambda$ des einfallenden Lichts, $-\Theta^C_{WG2}$ ein Winkel des einfallenden Lichts ist, das zu einem negativen kritischen Winkel in den zweiten Wellenleiter eingekoppelt wird, und $\Theta^C_{WG2}$ ein Winkel des einfallenden Lichts ist, das zu einem positiven kritischen Winkel in den zweiten Wellenleiter eingekoppelt wird.

3. Optische Vorrichtung nach Anspruch 2, wobei der erste Winkelbereich einen Bereich von Winkeln kleiner als $-\Theta_{WG2}^{C}$ und der zweite Winkelbereich einen Bereich von Winkeln größer als $\Theta_{WG2}^{C}$. umfasst.

4. Optische Vorrichtung nach einem der vorstehenden Ansprüche, wobei der erste, der zweite und der dritte Winkelbereich gemeinsam ein Sichtfeld von mehr als sechzig Grad aufspannen.

5. Optische Vorrichtung nach einem der vorstehenden Ansprüche, wobei der erste diffraktive Einkoppler eine erste Gitterteilung, $d_1$, aufweist und dafür konfiguriert ist, eine diffraktive Ordnung M zu nutzen, und wobei $d_1/M$ kleiner als 380 nm ist; und
der zweite diffraktive Einkoppler eine zweite Gitterteilung, $d_2$, aufweist und dafür konfiguriert ist, eine diffraktive Ordnung N zu nutzen und wobei $d_2/N$ kleiner als 460 nm ist.

6. Optische Vorrichtung nach einem der vorstehenden Ansprüche, wobei:

der erste diffraktive Einkoppler eine erste Gitterteilung, $d_1$, aufweist, wobei die erste Gitterteilung innerhalb von 20 % von 635 nm liegt; und
der zweite diffraktive Einkoppler eine zweite Gitterteilung, $d_2$, aufweist, wobei die zweite Gitterteilung innerhalb von 20 % von 822 nm liegt.

7. Optische Vorrichtung nach einem der vorstehenden Ansprüche, wobei der zweite diffraktive Einkoppler eine zweite Gitterteilung, $d_2$, aufweist, die zwischen 1,2-mal und 1,4-mal größer als eine erste Gitterteilung, $d_1$, des ersten diffraktiven Einkopplers ist.

8. Optische Vorrichtung nach einem der vorstehenden Ansprüche, wobei mindestens einer des ersten und des zweiten diffraktiven Einkopplers ein Basismuster mit einem U-förmigen Profil aufweist.

9. Optische Vorrichtung nach einem der vorstehenden Ansprüche, ferner umfassend:

einen Bildgenerator, der dazu dient, Licht, das ein Bild repräsentiert, auf den ersten diffraktiven Einkoppler zu richten;
einen ersten diffraktiven Auskoppler auf dem ersten Wellenleiter; und
einen zweiten diffraktiven Auskoppler auf dem zweiten Wellenleiter.

10. Verfahren, umfassend:

Richten von einfallendem Licht auf einen ersten diffraktiven Einkoppler eines ersten Wellenleiters (WG1);
Einkoppeln, durch den ersten diffraktiven Einkoppler, eines ersten Winkelbereichs und eines zweiten Winkelbereichs des einfallenden Lichts in den ersten Wellenleiter, wobei der erste und der zweite Wellenbereich sich nicht überlappen, wobei der erste Winkelbereich in negative Richtung in den ersten Wellenleiter eingekoppelt wird und der zweite Winkelbereich in positive Richtung in den ersten Wellenleiter eingekoppelt wird;
Übertragen, durch den ersten diffraktiven Einkoppler an einen zweiten diffraktiven Einkoppler eines zweiten Wellenleiters (WG2), von mindestens einem Teil des einfallenden Lichts, das nicht in den ersten Wellenleiter eingekoppelt wird, und
Einkoppeln, durch den zweiten diffraktiven Einkoppler, eines dritten Winkelbereichs des einfallenden Lichts, wobei der dritte Winkelbereich Winkel zwischen dem ersten Winkelbereich und dem zweiten Winkelbereich einschließt.

11. Verfahren nach Anspruch 10, wobei:

der dritte Winkelbereich einen Bereich von Winkeln zwischen $-\Theta_{WG2}^{C}$ und $\Theta_{WG2}^{C}$ umfasst, wobei, für mindestens eine Wellenlänge λ des einfallenden Lichts, $-\Theta_{WG2}^{C}$ ein Winkel des einfallenden Lichts ist, das zu einem negativen kritischen Winkel in den zweiten Wellenleiter eingekoppelt wird, und $\Theta_{WG2}^{C}$ ein Winkel des einfallenden Lichts ist, das zu einem positiven kritischen Winkel in den zweiten Wellenleiter eingekoppelt wird.

12. Verfahren nach Anspruch 11, wobei der erste Winkelbereich einen Bereich von Winkeln kleiner als $-\Theta_{WG2}^{C}$ und

der zweite Winkelbereich einen Bereich von Winkeln größer als $\Theta^C_{WG2}$ aufweist.

13. Verfahren nach einem der Ansprüche 10-12, wobei der erste, der zweite und der dritte Winkelbereich gemeinsam ein Sichtfeld von mehr als sechzig Grad aufspannen.

14. Verfahren nach einem der Ansprüche 10-13, wobei:

der erste diffraktive Einkoppler eine erste Gitterteilung, $d_1$, aufweist, wobei die erste Gitterteilung innerhalb von 20 % von 635 nm liegt; und
der zweite diffraktive Einkoppler eine zweite Gitterteilung, $d_2$, aufweist, wobei die zweite Gitterteilung innerhalb von 20 % von 822 nm liegt.

15. Verfahren nach einem der Ansprüche 10-14, wobei der zweite diffraktive Einkoppler eine zweite Gitterteilung, $d_2$, aufweist, die zwischen 1,2-mal und 1,4-mal größer als eine erste Gitterteilung, $d_1$, des ersten diffraktiven Einkopplers ist.

**Revendications**

1. Dispositif optique comprenant :

un premier guide d'ondes (WG1) ayant un premier coupleur d'entrée de diffraction, le premier coupleur d'entrée de diffraction étant conçu pour coupler une première plage angulaire de lumière incidente dans une direction négative dans le premier guide d'ondes, pour coupler une deuxième plage angulaire de lumière incidente dans une direction positive dans le premier guide d'ondes, les première et deuxième plages angulaires ne se superposant pas, et pour transmettre au moins une partie de la lumière incidente non couplée dans le premier guide d'ondes ; et
un second guide d'ondes (WG2) ayant un second coupleur d'entrée de diffraction, le second coupleur d'entrée de diffraction étant conçu pour coupler au moins une partie de la lumière incidente transmise par le premier coupleur d'entrée de diffraction, le second guide d'onde étant conçu pour coupler une troisième plage angulaire de la lumière incidente, la troisième plage angulaire incluant des angles entre la première plage angulaire et la deuxième plage angulaire.

2. Dispositif optique selon la revendication 1, dans lequel :

la troisième plage angulaire comprend une plage d'angles entre $-\Theta^C_{WG2}$ et $\Theta^C_{WG2}$ , où, pour au moins une longueur d'onde $\lambda$ de la lumière incidente, $-\Theta^C_{WG2}$ représente un angle de la lumière incidente qui est couplé à un angle critique négatif dans le second guide d'ondes et $\Theta^C_{WG2}$ représente un angle de la lumière incidente qui est couplé à un angle critique positif dans le second guide d'ondes.

3. Dispositif optique selon la revendication 2, dans lequel la première plage angulaire comprend une plage d'angles inférieure à $-\Theta^C_{WG2}$ et la deuxième plage angulaire comprend une plage d'angles supérieure à $\Theta^C_{WG2}$ .

4. Dispositif optique selon l'une quelconque des revendications précédentes, dans lequel les première, deuxième et troisième plages angulaires s'étendent conjointement sur un champ de vision de plus de soixante degrés.

5. Dispositif optique selon l'une quelconque des revendications précédentes, dans lequel le premier coupleur d'entrée de diffraction a un premier pas de diffraction, $d_1$, et est conçu pour utiliser un ordre de diffraction M, et dans lequel $d_1/M$ est inférieur à 380 nm ; et
le second coupleur d'entrée de diffraction a un second pas de diffraction, $d_2$, et est conçu pour utiliser un ordre de diffraction N, et dans lequel $d_2/N$ est inférieur à 460 nm.

6. Dispositif optique selon l'une quelconque des revendications précédentes, dans lequel :

le premier coupleur d'entrée de diffraction a un premier pas de diffraction, $d_1$, où le premier pas de diffraction est dans les 20 % de 653 nm ; et

le second coupleur d'entrée de diffraction a un second pas de diffraction, $d_2$, où le second pas de diffraction est dans les 20 % de 822 nm.

**7.** Dispositif optique selon l'une quelconque des revendications précédentes, dans lequel le second coupleur d'entrée de diffraction a un second pas de diffraction, $d_2$, qui est compris entre 1,2 fois et 1,4 fois le premier pas de diffraction, $d_1$, du premier coupleur d'entrée de diffraction.

**8.** Dispositif optique selon l'une quelconque des revendications précédentes, dans lequel au moins un parmi le premier et le second coupleur d'entrée de diffraction a un motif de base avec un profil en U.

**9.** Dispositif optique selon l'une quelconque des revendications précédentes, comprenant en outre :

un générateur d'images fonctionnant en lumière directe représentant une image sur le premier coupleur d'entrée de diffraction ;
un premier coupleur de sortie de diffraction sur le premier guide d'ondes ; et
un second coupleur de sortie de diffraction sur le second guide d'ondes.

**10.** Procédé comprenant les étapes consistant à :

diriger une lumière incidente sur un premier coupleur d'entrée de diffraction d'un premier guide d'ondes (WG1) ;
coupler, par le biais du premier coupleur d'entrée de diffraction, une première plage angulaire et une deuxième plage angulaire de la lumière incidente dans le premier guide d'onde, les première et deuxième plages angulaires ne se superposant pas, la première plage angulaire étant couplée à une direction négative dans le premier guide d'onde et la deuxième plage angulaire étant couplée à une direction positive dans le premier guide d'onde ;
transmettre, à travers le premier coupleur d'entrée de diffraction à un second coupleur d'entrée de diffraction d'un second guide d'ondes (WG2), au moins une partie de la lumière incidente non couplée dans le premier guide d'ondes ; et
coupler, par le second coupleur d'entrée de diffraction, une troisième plage angulaire de la lumière incidente, la troisième plage angulaire incluant des angles entre la première plage angulaire et la deuxième plage angulaire.

**11.** Procédé selon la revendication 10, dans lequel :

la troisième plage angulaire comprend une plage d'angles entre $-\Theta^C_{WG2}$ et $\Theta^C_{WG2}$, où, pour au moins une longueur d'onde $\lambda$ de la lumière incidente, $-\Theta^C_{WG2}$ représente un angle de la lumière incidente qui est couplé à un angle critique négatif dans le second guide d'ondes et $\Theta^C_{WG2}$ représente un angle de la lumière incidente qui est couplé à un angle critique positif dans le second guide d'ondes.

**12.** Procédé selon la revendication 11, dans lequel la première plage angulaire comprend une plage d'angles inférieure à $-\Theta^C_{WG2}$ et la deuxième plage angulaire comprend une plage d'angle supérieure à $\Theta^C_{WG2}$.

**13.** Procédé selon l'une quelconque des revendications 10 à 12, dans lequel les première, deuxième et troisième plages angulaires s'étendent conjointement sur un champ de vision de plus de soixante degrés.

**14.** Procédé selon l'une quelconque des revendications 10 à 13, dans lequel :

le premier coupleur d'entrée de diffraction a un premier pas de diffraction, $d_1$, où le premier pas de diffraction est dans les 20 % de 653 nm ; et
le second coupleur d'entrée de diffraction a un second pas de diffraction, $d_2$, où le second pas de diffraction est dans les 20 % de 822 nm.

**15.** Procédé selon l'une quelconque des revendications 10 à 14, dans lequel le second coupleur d'entrée de diffraction a un second pas de diffraction, $d_2$, qui est compris entre 1,2 fois et 1,4 fois le premier pas de diffraction, $d_1$, du

premier coupleur d'entrée de diffraction.

**FIG. 1A**

EP 4 031 927 B1

FIG. 1B

FIG. 1C

EP 4 031 927 B1

**FIG. 1D**

IMAGE GENERATOR

**FIG. 1E**

EP 4 031 927 B1

FIG. 2A

FIG. 2B

FIG. 3

FIG. 4

FIG. 5

FIG. 6

FIG. 7

EP 4 031 927 B1

FIG. 8A

FIG. 8B

FIG. 8C

Reflectance and Transmittance of TE Wave

Angle of Incident Light (°)

**FIG. 9A**

Reflectance and Transmittance of TE Wave

Angle of Incident Light (°)

FIG. 9B

EP 4 031 927 B1

**FIG. 10**

**FIG. 11**

Reflectance and Transmittance of TE Wave

Angle of Incident Light (°)

Legend: $R_0$, $T_0$, $R_{-1}$, $R_1$, $T_{-2}$, $T_{-1}$, $T_1$, $T_2$

FIG. 12

FIG. 13

EP 4 031 927 B1

FIG. 14

**FIG. 15**

FIG. 16

EP 4 031 927 B1

FIG. 17

**FIG. 18**

**FIG. 19**

FIG. 20

**FIG. 21**

EP 4 031 927 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19198478
- WO 2017180403 A
- EP 3671293 A1
- WO 2018175488 A1

**Non-patent literature cited in the description**

- **A. BORISKIN ; V. DRAZIC ; R. KEATING ; M. DAMGHANIAN ; O. SHRAMKOVA ; L. BLONDÉ.** Near field focusing by edge diffraction. *Optics Letters,* 2018, vol. 43 (16), 4053-4056